# EUROPEAN PATENT SPECIFICATION

(11) **EP 2 595 247 B1**
(45) Date of publication and mention of the grant of the patent: **22.05.2019**
(21) Application number: 12193027.5
(22) Date of filing: 16.11.2012
(51) Int. Cl.: H01R 9/05, H01R 9/053, H01R 43/28, H01R 13/512, H01R 43/22

(54) **Connector plug and method of fitting the connector plug to a coaxial cable**
Anschlussstecker und Verfahren zum Verbinden dieses Anschlusssteckers mit einem Koaxialkabel
Connecteur mâle et méthode pour assembler ce connecteur mâle à un câble coaxial.

(30) Priority: 17.11.2011 GB 201119905
(43) Date of publication of application: 22.05.2013
(73) Proprietor: Commtel Innovate Limited, Leicestershire LE16 7WB (GB)
(72) Inventor: Drewnicki, Alexander, Market Harborough, Leicestershire LE16 7WB (GB); Drewnicki, John, Market Harborough, Leicestershire LE16 7WB (GB); Drewnicki, Richard, Market Harborough, Leicestershire LE16 7WB (GB)
(74) Representative: Appleyard Lees IP LLP

(56) References cited:
- WO-A1-01/13470
- WO-A1-92/16983
- WO-A1-03/009423
- DE-U1- 29 720 827
- US-A- 5 491 315
- US-A- 6 080 015
- US-B1- 6 796 829

## Description

The present invention relates to a connector plug for a coaxial cable, for example an RF television aerial cable or a satellite feed cable.

A coaxial cable typically comprises a solid copper inner conductor element, a braided copper outer conductor shield, a dielectric insulator sleeve between the inner and outer conductors, and an outer insulator sleeve. A standard connector plug for a coaxial cable typically comprises a body member having an outer connector element for electrical connection to the outer conductor, an inner element configured to receive the inner conductor element, a claw for gripping the outer insulator sleeve and a retaining cap that can be screwed onto the body member causing the claw to grip the sleeve. The claw also establishes an electrical connection between the outer conductor and the body member, by contact with a portion of the braided outer conductor after it has been folded backwards over the claw and the insulator sleeve.

Various types of coaxial connector plug are in common usage. One of these is the Belling-Lee or IEC 169-2 connector (also commonly referred to as a TV aerial plug), which typically has a push fit into a complementary socket and a central pin into which the solid core of the coaxial cable is inserted. Another is the F connector, which usually has screw-fit connection with a complementary socket and does not have a central pin, the solid core of the central conductor instead serving as the pin of the male connector.

WO 03/009423 A1 describes a connector for coupling to a multi-conductor cable having a center conductor and an outer conductor. The connector comprises a housing that is electrically connected to the outer conductor and an electrically conductive pin that is electrically connected to the inner conductor. WO01/13470 describes an electrical connector for coupling to an insulated electrical conductor. The electrical connector comprises a housing having an electrically conductive portion and a bore therein. US6796829B1 describes an electrical connector for coupling to an insulated single conductor electrical cable or coaxial cable. The connector has a housing having an electrically conductive portion and a bore therein. US5491315 describes a switching device for electrically activating and deactivating a coaxial cable junction between a coaxial cable terminus and a connection jack. The switching device comprises an electrically conductive housing having a first end adapted to be physically connected to the external terminus and a second end adapted to be physically connected to the connection jack. US 6080015 A describes a connector for coaxial cable having an inner conductor and an outer conductor separated by a dielectric. WO92/16983 describes a method of preparing a cable, a coaxial cable spacer and a plurality of coaxial cables. DE 29720827 U1 describes a coaxial connector for connecting a coaxial cable to an inner conductor and an outer conductor. The coaxial connector comprising a first and second contact means together with first and second clamping means.

In both cases, attaching the plug to the end of a coaxial is a time-consuming and fiddly process which involves carefully stripping off the outer insulator sleeve from the cable, folding back the braided outer conductor, removing part of the dielectric sleeve to expose the inner conductor, sliding a spacer (and for a Belling-Lee connector a hollow metal pin) over the inner conductor, sliding on the metal body member, trimming off the ends of the braided conductor, screwing on the retaining cap and finally trimming off any excess length of the inner conductor. Preferably, with a Belling-Lee connector, the inner conductor is also soldered to the pin. Completing this process correctly requires care and attention. If it is not carried out correctly, a poor electrical connection may result leading to loss of signal. Also, the plug is not securely attached to the cable and may come loose with use.

It is an object of the present invention to provide a connector plug for a coaxial cable that mitigates at least some of the aforesaid disadvantages.

According to an embodiment of the present invention there is provided a connector plug as defined in claim 1.

The provision of a piercing element that pierces the outer insulator sleeve and establishes an electrical connection between the body member and the outer conductor ensures a good electrical connection and therefore good signal transmission. The piercing element also ensures a very strong mechanical connection between the plug and the cable. Fitting of the plug to the cable is also greatly simplified and much quicker as compared to fitting a traditional coaxial plug.

The gripping element comprises a claw having a plurality of radially adjustable legs, at least one of the legs including a piercing element. The retaining cap is configured to adjust the radial positions of the legs.

The retaining cap is adjustable between first and second axially displaced positions, wherein when the retaining cap is in the first position the gripping element is disposed in the non-gripping configuration, and when the retaining cap is in the second position the gripping element is disposed in the gripping configuration. The gripping element can thus be adjusted to the gripping configuration simply by adjusting the cap.

The connector plug includes a spacer element that is removably attached to the body member, said spacer element being configured such that when attached to the body member it prevents movement of the retaining cap from said first position to said second position. This prevents the cap from being tightened too early (before the cable has been inserted).

According to one arrangement, the support element includes a connector pin that is configured to receive and support the inner conductor. In this embodiment the plug may be used as a replacement for a standard Belling-Lee connector. The connector pin preferably includes a resilient connector element that establishes an electrical connection with the inner conductor.

According to another arrangement, the support element is configured to support the inner conductor so that it serves as a connector pin. In this embodiment the plug may be used as a replacement for a standard F connector.

The body member may include a front part and a rear part that are connected together for relative rotation. Advantageously, the front and rear parts of the body member include complementary locking formations that may be engaged to prevent relative rotation. This makes it easier to tighten the retaining cap. Preferably, the complementary locking formations may be disengaged by relative axial movement of the front and rear parts of the body member to allow relative rotation. This allows the plug to be connected to a threaded socket without twisting the cable.

According to another embodiment of the invention there is provided a plug kit as defined in claim 8. The tool makes it very easy to trim away the outer insulating sleeve, the braided outer conductor and the inner dielectric insulator in a single operation, leaving an exposed length of the central conductor.

The cutter element is preferably resiliently biased to the non-cutting position.

According to yet another embodiment of the invention there is provided a method according to claim 10. The fitting method is extremely quick and simple as compared to the process for fitting a standard coaxial plug. The connected plug also has a much better electric and mechanical connections with the coaxial cable, making it more durable and reliable.

Embodiments of the invention will now be described by way of example with reference to the accompanying drawings in which:
Figures 1a-1c are isometric views of a connector plug according to a first embodiment of the invention, in which the plug is shown respectively in fully assembled, partly disassembled and fully disassembled configurations;
Figures 2a-2d are side sectional views of the first connector plug and a coaxial cable, illustrating the steps of a process for attaching the plug to the cable;
Figures 3a-3c are isometric views of a connector according to a second embodiment of the invention, in which the plug is shown respectively in fully assembled, partially disassembled and fully disassembled configuration;
Figures 4a-4d are side sectional views of the second connector plug and a coaxial cable, illustrating the steps of a process for attaching the plug to the cable, and Figures 4e-4h are external side views of the plug and the cable during the same steps;
Figure 5 is an isometric view of a cable trimming tool for use when attaching the plug to a coaxial cable, and
Figures 6a-6e are isometric views of the cable trimming tool, showing the steps of a process for trimming a coaxial cable.

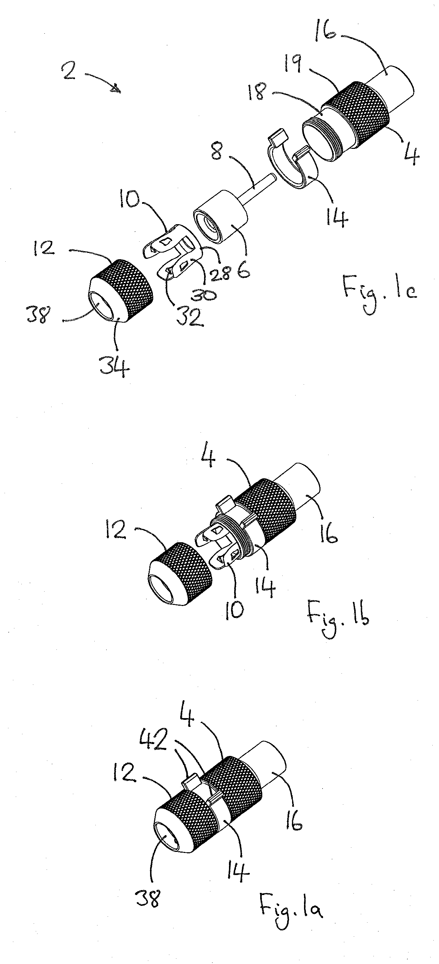

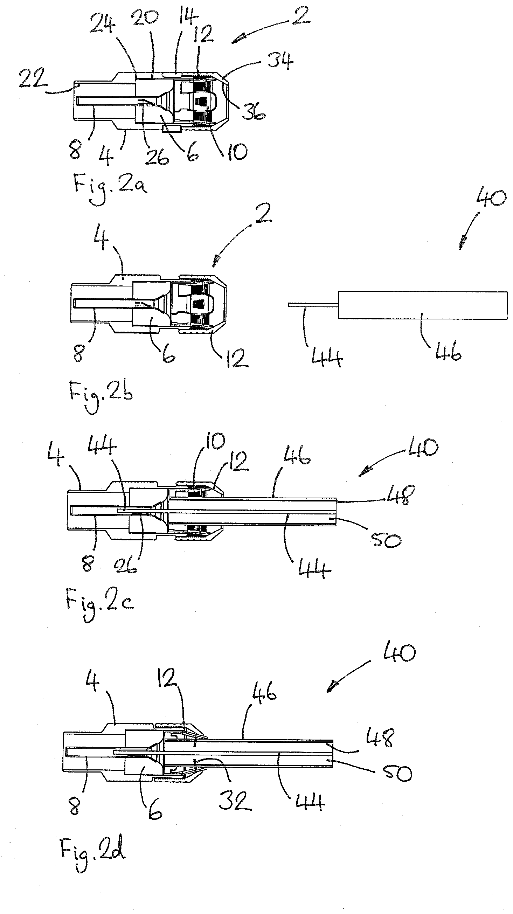

The first plug 2 as illustrated in Figures 1a-1c and 2a-2d is compatible with a connector of the Belling-Lee type. The plug comprises a body member 4, a support element 6, a conductor pin 8 that is supported by the support element 6, a claw 10, a retaining cap 12 and a removable spacer clip 14. The body member 4 comprises a hollow, generally cylindrical element having a connector portion 16 at one end for connection to a coaxial socket and an externally threaded rear portion 18 at the opposite end. The body member 4 also includes an external knurled sleeve 19 that extends radially outwards beyond the rear portion 18. Internally, the body member 4 has a large diameter bore 20 towards the rear end 18 and a smaller diameter bore 22 at its front end 16, providing a step 24 at the junction of the two bores.

The support element 6 comprises a generally cylindrical sleeve that is made of an electrically insulating material and has a diameter slightly smaller than the diameter of the larger bore 20, so that when assembled the support element 6 sits closely within the bore 20 abutting the step 24. The support element 6 supports the hollow metal pin 8, which extends forwards towards the front end of the body member 4. The pin 8 includes an inwards facing tab 26 to establish an electrical connection with the inner conductor of a coaxial cable.

The claw 10 includes an annular disc 28 and four legs 30 that extend rearwards from the disc 28 approximately parallel to the longitudinal axis of the plug. Each of these legs 30 carries an inwards facing spur 32. The claw 10 is dimensioned to sit in the rear part of the large diameter bore 20 with the legs 30 protruding rearwards from the body member 4.

The retaining cap 12 comprises a hollow cylindrical sleeve having an internal screw thread that mates with the external thread on the rear part 18 of the body member 4. At the rear end of the cap a frusto-conical portion 34 provides an inwards inclined internal wall 36. This inclined wall 36 is configured to engage the ends of the legs 30 and to drive those legs inwards as the cap 12 is screwed onto the body member 4. The rear end of the cap includes an opening 38 to allow the insertion of a coaxial cable 40.

The spacer clip 14 is C-shaped and dimensioned to sit on the rear part 18 of the body member 4 between the knurled sleeve 19 and the threaded retaining cap 12. The clip 14 is made of a resilient material, for example a plastic material, allowing it to be easily removed from or replaced on the body member 4. When the spacer clip 14 is attached to the body member 4 it prevents the retaining cap 12 from being screwed completely onto the body member 4 and thus prevents the retaining cap 12 from driving the legs 30 of the claw 10 inwards. Tabs 42 on the ends of the C-shaped clip 14 allow it to be easily removed from the body member 4, after which tightening of the retaining cap 12 can be completed.

A process for attaching the plug 2 to a coaxial cable 40 will now be described with reference to Figures 2a-2d.

In Figure 2a the plug 2 is shown fully assembled and in a condition for receiving the prepared end of a coaxial cable 40. It should be noted that the spacer clip 14 is attached to the body member 4, thus maintaining a gap between the body member 4 and the retaining cap 12 and preventing the legs 30 of the claw 10 from being driven inwards.

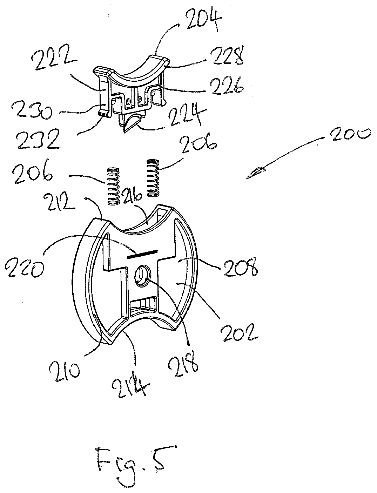

The prepared end of the coaxial cable 40 is shown in Figure 2b. An end portion of the inner conductor 44 has been exposed by stripping away part of the outer insulator sleeve 46, the braided outer conductor shield 48 and the insulating dielectric sleeve 50. A tool for preparing the cable end as described is shown in Figure 5 and is described below.

In Figure 2c the prepared end of the coaxial cable 40 has been inserted fully into the plug 2, so that the cut ends of the outer insulating sleeve 46, the braided conductor shield 48 and the dielectric sleeve 50 abut the annular disc 28 of the claw 10. The solid central conductor 44 has been inserted into the hollow pin 8 where it is engaged by the resilient tab 26, thereby establishing an electrical connection between the conductor 44 and the pin 8. The spacer clip 14 has been removed to allow the cap 12 to be tightened.

Figure 2d illustrates the final stage of the attachment process, in which the retaining cap 12 has been tightened onto the body member 4. As the cap 12 is tightened the inclined walls 36 of the frusto-conical portion 34 push the legs 30 of the claw 10 radially inwards, thereby driving the spurs 32 through the outer insulating sleeve 46 and into the braided outer conductor shield 48. This completes an electrical connection between the outer conductor shield 48, the claw 10 and the conductor body 4.

It can be seen that connecting the plug 2 to a prepared coaxial cable 40 is very quick and simple, requiring only three operations: inserting the cable 40 into the plug 2, removing the spacer clip 14 and tightening the retaining cap 12. The electrical connection is reliable owing to the insertion of the spurs 32 into the braided outer conductor shield 48 and the engagement of the inner conductor 44 with the resilient tab 26 in the pin 8. Furthermore, a very strong mechanical connection is created between the plug 2 and the cable 40 owing to the fact that the spurs 32 are inserted through the outer insulating layer 46 and the braided outer conductor shield 48 into the dielectric insulator sleeve 50.

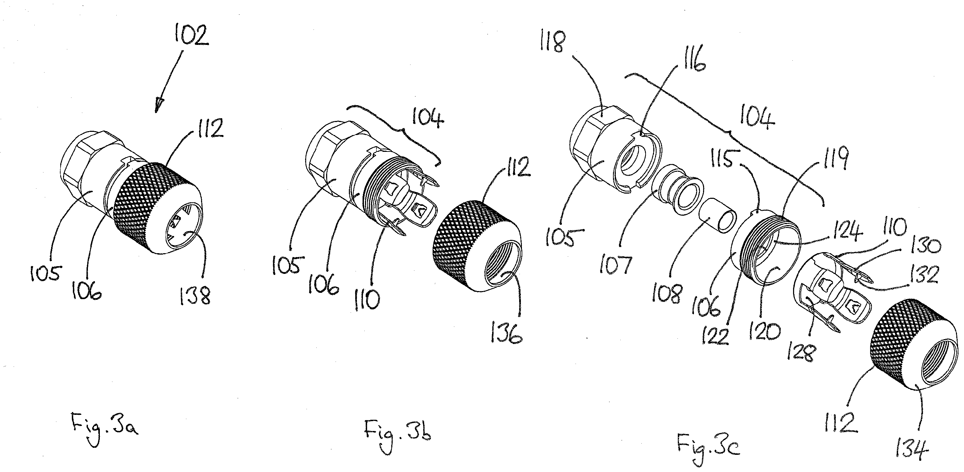

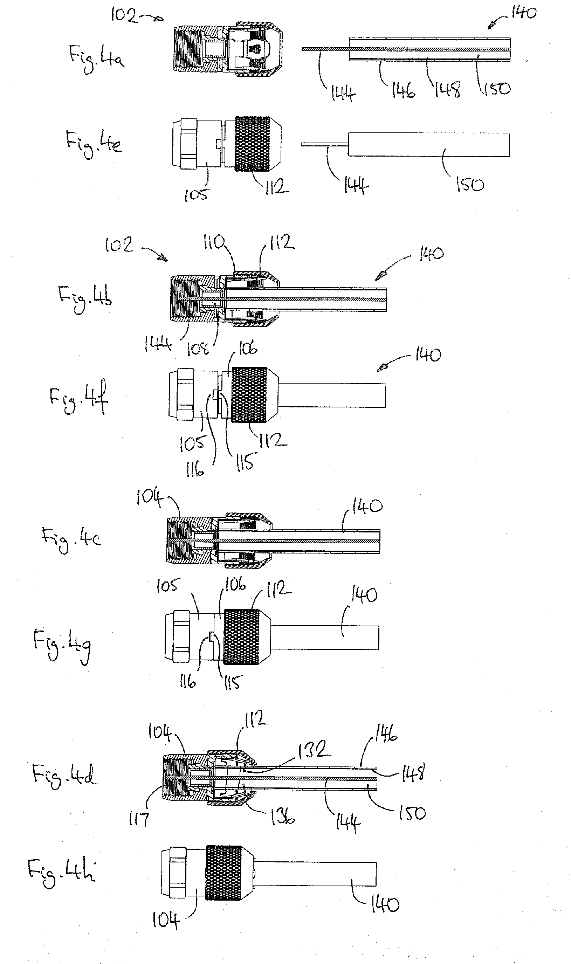

The second plug 102 as illustrated in Figures 3a-3c and 4a-4h is compatible with an F connector. The plug includes a three-part body member 104 comprising a front part 105, a rear part 106 and a connector piece 107, a support element 108, a claw 110 and a retaining cap 112. Optionally, the plug 102 may also include a removable spacer clip (not shown) similar to the clip 14 of the first plug 2 shown in figures 1a-1c and 2a-2d.

The front part 105 and the rear part 106 of the body member 104 are connected to each other by the connecting piece 107 so as to allow relative rotation of the front and rear parts about the central axis of the plug. The connecting part 107 may for example consist of a hollow cylindrical rivet having flanges at either end that hold the front and rear parts of the body member together.

The rear part 106 includes a locking formation in the form of a forwards-facing detent 115 that is engagable in a complementary locking formation comprising a rearwards facing notch 116 on the rear end of the front part 105. The connecting part 107 is dimensioned to allow a small amount of axial movement between the front and rear parts to allow engagement and disengagement of the complementary locking formations. When the locking formations are disengaged the front part 105 of the body member can be rotated relative to the rear part 106, allowing it to be attached to an F connector socket. When the locking formations are engaged, relative rotation of the front and rear parts 105, 106 is prevented, making it easier to screw the cap 112 onto the body member 104.

The front part 105 of the body member includes an internal screw thread 117 at its front end for engagement with a complementary screw thread of a conventional F connector socket, and an external nut 118 allowing the use of a spanner or wrench. The rear portion 106 of the body member includes an external screw thread 119. Internally, the rear part 106 of the body member has a large diameter bore 120 at its rear end and a smaller diameter bore 122 at its front end 16, providing a step 124 at the junction of the two bores.

The support element 108 comprises a generally cylindrical sleeve that is made of an electrically insulating material and has a diameter slightly smaller than the internal diameter of the connecting piece 107, so that it has an interference fit within the bore of the connecting piece 107. The support element includes a central bore that receives and supports the inner conductor 144 of the coaxial cable 140.

The claw 110 includes an annular disc 128 and four legs 130 that extend rearwards from the disc 128 approximately parallel to the longitudinal axis of the plug. Each of these legs 130 carries an inwards facing spur 132. The claw 110 is dimensioned to sit in the rear part of the large diameter bore 120 with the legs 130 protruding rearwards from the body member 104.

The retaining cap 112 comprises a hollow cylindrical sleeve having an internal screw thread that mates with the external thread 119 on the rear part 106 of the body member. At the rear end of the cap 112 a frusto-conical portion 134 provides an inwards inclined internal wall 136. This inclined wall 136 is configured to engage the ends of the legs 130 and to drive those legs inwards as the cap 112 is screwed onto the body member 104. The rear end of the cap includes an opening 138 to allow the insertion of a coaxial cable 140.

A process for attaching the plug 102 to a coaxial cable 140 will now be described with reference to Figures 4a-4h.

In Figures 4a and 4e the plug 102 is shown fully assembled and in a condition for receiving the prepared end of a coaxial cable 140. An end portion of the inner conductor 144 has been exposed by stripping away part of the outer insulator sleeve 146, the braided outer conductor shield 148 and the insulating dielectric sleeve 150.

In Figures 4b and 4f the prepared end of the coaxial cable 140 has been inserted fully into the plug 102, so that the cut ends of the outer insulating sleeve 146, the braided conductor shield 148 and the dielectric sleeve 150 abut the annular disc 128 of the claw 110. The solid central conductor 144 has been inserted through the insulating support element 108. The locking formations 115, 116 are disengaged, allowing the front part 105 of the body member 104 to rotate relative to the rear part 106.

In Figures 4c and 4g the locking formations 115, 116 are engaged, preventing the front part 105 of the body member 104 from rotating relative to the rear part 106 and thus allowing the retaining cap 112 to be tightened.

Figures 4d and 4h illustrate the final stage of the attachment process, in which the retaining cap 112 has been tightened onto the body member 104. As the cap 112 is tightened the inclined walls 136 of the frusto-conical portion 134 push the legs 130 of the claw 110 radially inwards, thereby driving the spurs 132 through the outer insulating sleeve 146 and into the braided outer conductor shield 148. This completes an electrical connection between the outer conductor shield 148, the claw 110 and the conductor body 104.

As with the first embodiment of the invention, connecting the plug 102 to a prepared coaxial cable 140 is very quick and simple, consisting only of inserting the cable 140 into the plug 102 and tightening the retaining cap 112. The electrical connection is reliable owing to the insertion of the spurs 132 into the braided outer conductor shield 48. Furthermore, a very strong mechanical connection is created between the plug 102 and the cable 140 owing to the fact that the spurs 132 are inserted through the outer insulating layer 146 and the braided outer conductor shield 148 into the dielectric insulator sleeve 150.

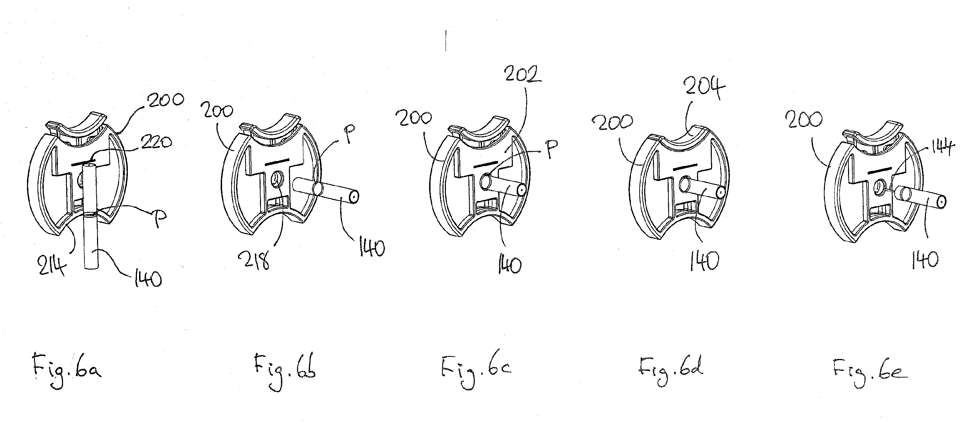

Figures 5 and 6a to 6f show a cable trimming tool 200 for use when attaching either of the plugs to a coaxial cable. The tool 200 may be supplied separately as a kit with one or more plugs 2, 102.

The cable trimming tool 200 includes a body 202, a cutter 204 and two helical springs 206. The body 202 is a moulded plastic component comprising a plate 208 with a peripheral strengthening rib 210. The plate 208 is approximately circular in shape having upper and lower arcuate cut-outs 212, 214 in the top and bottom edges. A central portion of the plate 208 is double-walled providing a slot 216 that extends into the body 202 from the upper cut-out 212, for receiving the cutter 204. The body 202 includes a circular hole 218 that extends through the centre of the plate 208 perpendicular to the plane thereof. A measuring mark 220 is provided on the face of the plate 208 above the hole 218.

The cutter 204 comprises a moulded plastic frame 222 that supports a metal blade 224. The frame 222 includes a lower portion 226 that fits into the slot 216 in the body 202 and an upper rib 228 that can be seated against the edge of the upper cut-out 212. Two legs 230 are provided at opposite ends of the frame, each leg including an outward facing detent 232 that engages a corresponding recess within the slot 216 to secure the cutter 204 to the body 202. The springs 206 are compressed between the cutter 204 and the body 202 and serve to bias the cutter upwards.

The cutter 204 can slide up and down within the slot 216 between upper and lower positions. The springs 206 are compressed between the cutter 204 and the body 202 and serve to bias the cutter upwards towards the upper position. The cutter 204 can be pressed downwards to the lower position by squeezing the upper rib 228 and the lower arcuate portion 214 between thumb and forefinger. When the cutter is in the lower position the blade 224 extends a predetermined distance across the hole 218, this distance being chosen so that when a coaxial cable 140 of a chosen size is inserted into the hole 218, the blade cuts through the outer insulating sleeve 146, the braided outer conductor shield 148 and the dielectric insulator sleeve 150 without cutting the central conductor 144. When the cutter 204 is released it returns to the upper position in which the blade 224 is clear of the hole 218, allowing a coaxial cable to be inserted into or removed from the hole.

Use of the cable trimming tool 200 is illustrated in Figs. 6a to 6e. First, the end of a coaxial cable 140 is placed level with the measuring mark 220 and the cable is grasped at the point P where it crosses the lower arcuate cut-out 214 (Fig. 6a). Then, the end of the cable is inserted into the hole 218 (Figs. 6b, 6c) so that the point P is level with the face of the body 202. This ensures that the correct length of insulator etc is stripped from the end of the cable. The cutter 204 is then pressed downwards (Fig. 6d) and the trimming tool 200 is rotated around the cable 140 to produce a circumferential cut all around the cable 140. Finally, the cable 140 is withdrawn from the tool 200 (Fig. 6e) and the cut portion of the outer insulator sleeve, the braided shield and the dielectric insulator layer is removed to leave an exposed length of the inner conductor 144.

Various modifications of the invention are of course possible. For example, the F connector plug may be designed for a push fit with an F connector socket instead of a threaded screw fit. In that case, the three-part body may be replaced by a simple one-part body.

## Claims

1. A connector plug (2, 102) for use with a coaxial cable (40, 140) comprising inner and outer conductors (44, 144, 48, 148), an inner insulator (50) between the inner and outer conductors and an outer insulator sleeve (46, 146), the connector plug (2, 102) comprising
a body member (4, 104) having a connector portion (16, 105) at a front end for connection to a coaxial socket and an externally threaded portion (18, 119) at a rear end, said body member configured for electrical connection to the outer conductor (48, 148),
a support element (6, 108) configured to receive and support the inner conductor,
a gripper element for gripping the cable, the gripper element comprises a claw (10, 110) having a plurality of radially adjustable legs (30, 130), at least one of the legs including a piercing element (32, 132) that is configured to pierce the outer insulator sleeve and establish an electrical connection between the body member (4, 104) and the outer conductor (48,148) when the gripper element is in a gripping configuration, and
a retaining cap (12, 112) having an internal screw thread (117) that mates with the external screw thread (119) on the rear part (106) of the body member and a frusto-conical portion (34, 134) that provides an inwards inclined internal wall (36, 136),
wherein the retaining cap (12, 112) is configured to adjust the gripper element between a gripping configuration and a non-gripping configuration by adjusting the radial positions of the legs (30, 130),
wherein the retaining cap (12, 112) is adjustable by being screwed onto the body member between first and second axially displaced positions,
wherein when the retaining cap is in the first position the gripping element is disposed in the non-gripping configuration, and when the retaining cap is in the second position the gripping element is disposed in the gripping configuration;
**characterised in that**
the body member (4, 104) has a first bore (20, 122) at the front end and a larger second bore (22, 120) at the rear end providing a step (24, 124) at a junction of the two bores,
the gripping element is dimensioned to sit in a rear part of the second bore with the legs protruding rearwards from the body member, and
the connector plug (2, 102) includes a spacer element (14) that is removably attached to the body member, said spacer element being configured such that when attached to the body member it prevents movement of the retaining cap (12, 112) from said first position to said second position.

2. A connector plug according to claim 1, wherein the support element (6) includes a connector pin (8) that is configured to receive and support the inner conductor (44, 144).

3. A connector plug according to claim 2, wherein the connector pin (8) includes a resilient connector element (26) that establishes an electrical connection with the inner conductor (44, 144).

4. A connector plug according to claim 1, wherein the support element (108) is configured to support the inner conductor (44, 144) so that it serves as a connector pin.

5. A connector plug according to any one of the preceding claims, wherein the body member (104) includes a front part (105) and a rear part (106) that are connected together for relative rotation wherein the front part (105) includes the internal screw thread (117) for engagement with the coaxial socket and the rear part (106) has the externally threaded portion (119).

6. A connector plug according to claim 5, wherein the front and rear parts (105, 106) of the body member include complementary locking formations (115,116) that may be engaged by relative axial movement of the front and rear parts of the body member to prevent relative rotation.

7. A connector plug according to claim 6, wherein the complementary locking formations may be disengaged by relative axial movement of the front and rear parts of the body member to allow relative rotation by relative axial movement of the front and rear parts of the body member.

8. A plug kit comprising
at least one connector plug (2, 102) according to any one of claims 1 to 7 and
a coaxial cable trimming tool (200), the coaxial cable trimming tool including a body member (202) with an aperture (218) for receiving a coaxial cable, and a cutter element (204) including a blade (224) that can be adjusted relative to the aperture between cutting and non-cutting positions,
wherein when the blade is in the cutting position it extends across the aperture to cut a coaxial cable located in the aperture substantially to the depth of the inner conductor.

9. A plug kit according to claim 8, wherein the cutter element is resiliently biased to the non-cutting position.

10. A method of fitting the connector plug (2, 102) of any one of claims 1 to 7 to a coaxial cable that comprises inner and outer conductors (44, 144, 48, 148), an inner insulator (50) between the inner and outer conductors (44, 144, 48, 148)and an outer insulator sleeve (46, 146), the method including:
providing the connector plug (2, 102) fully assembled and in a condition for receiving a prepared end of a coaxial cable (40, 140),
trimming the coaxial cable to expose the inner conductor (44, 144),
inserting the trimmed cable into the assembled connector plug (2, 102), removing the spacer element (14), and
tightening the retaining cap (12, 112) to establish an electrical connection between the body member and the outer conductor by piercing the outer insulator layer (46, 146) with the piercing element (32, 132).

## Patentansprüche

1. Verbinderstecker (2, 102) zur Verwendung mit einem Koaxialkabel (40, 140), das einen Innen- und Außenleiter (44, 144, 48, 148), einen Innenisolator (50) zwischen dem Innen- und Außenleiter und eine Außenisolatorhülle (46, 146) umfasst, wobei der Verbinderstecker (2, 102) Folgendes umfasst:
ein Körperelement (4, 104) mit einem Verbinderteil (16, 105) an einem vorderen Ende zur Verbindung mit einer Koaxialbuchse und einem Außengewindeteil (18, 119) an einem hinteren Ende, wobei das Körperelement zur elektrischen Verbindung mit dem Außenleiter (48, 148) konfiguriert ist,
ein Stützelement (6, 108), das zum Empfangen und Stützen des Innenleiters konfiguriert ist,
ein Greiferelement zum Greifen des Kabels, wobei das Greiferelement eine Kralle (10, 110) mit mehreren radial anpassbaren Beinen (30, 130) umfasst, wobei wenigstens eines der Beine ein Durchbohrungselement (32, 132) beinhaltet, das zum Durchbohren der Außenisolatorhülle und Einrichten einer elektrischen Verbindung zwischen dem Körperelement (4, 104) und dem Außenleiter (48, 148), wenn sich das Greiferelement in einer greifenden Konfiguration befindet, konfiguriert ist, und
eine Haltekappe (12, 112) mit einem Innenschraubgewinde (117), die mit dem Außenschraubgewinde (119) auf dem hinteren Teil (106) des Körperelements zusammenpasst, und einem Kegelstumpfteil (34, 134), der eine nach innen geneigte Innenwand (36, 136) bereitstellt,
wobei die Haltekappe (12, 112) zum Anpassen des Greiferelements zwischen einer greifenden Konfiguration und einer nichtgreifenden Konfiguration durch Anpassen der radialen Positionen der Beine (30, 130) konfiguriert ist,
wobei die Haltekappe (12, 112) dadurch anpassbar ist, dass sie auf das Körperelement zwischen einer ersten und zweiten axial verlagerten Position geschraubt wird, wobei, wenn sich die Haltekappe in der ersten Position befindet, das Greifelement in der nichtgreifenden Konfiguration angeordnet ist, und, wenn sich die Haltekappe in der zweiten Position befindet, das Greifelement in der greifenden Konfiguration angeordnet ist;
**dadurch gekennzeichnet, dass**
das Körperelement (4, 104) eine erste Bohrung (20, 122) an dem vorderen Ende und eine größere, zweite Bohrung (22, 120) an dem hinteren Ende aufweist, wobei eine Stufe (24, 124) an einem Übergang der zwei Bohrungen bereitgestellt wird,
das Greifelement so bemessen ist, dass es sich in einem hinteren Teil der zweiten Bohrung befindet, wobei die Beine von dem Körperelement nach hinten hervorstehen, und
der Verbinderstecker (2, 102) ein Abstandshalterelement (14) beinhaltet, das entfernbar an dem Körperelement angebracht ist, wobei das Abstandshalterelement so konfiguriert ist, dass es, wenn es an dem Körperelement angebracht ist, eine Bewegung der Haltekappe (12, 112) von der ersten Position zu der zweiten Position verhindert.

2. Verbinderstecker nach Anspruch 1, wobei das Stützelement (6) einen Verbinderstift (8) beinhaltet, der zum Empfangen und Stützen des Innenleiters (44, 144) konfiguriert ist.

3. Verbinderstecker nach Anspruch 2, wobei der Verbinderstecker (8) ein nachgiebiges Verbinderelement (26) beinhaltet, das eine elektrische Verbindung mit dem Innenleiter (44, 144) einrichtet.

4. Verbinderstecker nach Anspruch 1, wobei das Stützelement (108) zum Stützen des Innenleiters (44, 144) konfiguriert ist, so dass er als ein Verbinderstift dient.

5. Verbinderstecker nach einem der vorhergehenden Ansprüche, wobei das Körperelement (104) einen vorderen Teil (105) und einen hinteren Teil (106) beinhaltet, die zur relativen Drehung miteinander verbunden sind, wobei der vordere Teil (105) das Innenschraubgewinde (117) zum Eingriff mit der Koaxialbuchse beinhaltet und der hintere Teil (106) den Außengewindeteil (119) aufweist.

6. Verbinderstecker nach Anspruch 5, wobei der vordere und hintere Teil (105, 106) des Körperelements komplementäre Arretierungsgebilde (115, 116) beinhalten, die durch eine relative axiale Bewegung des vorderen und hinteren Teils des Körperelements in Eingriff gebracht werden können, um eine relative Drehung zu verhindern.

7. Verbinderstecker nach Anspruch 6, wobei die komplementären Arretierungsgebilde durch eine relative axiale Bewegung des vorderen und hinteren Teils des Körperelements gelöst werden können, um eine relative Drehung durch eine relative axiale Bewegung des vorderen und hinteren Teils des Körperelements zu ermöglichen.

8. Steckersatz, der Folgendes umfasst:
wenigstens einen Verbinderstecker (2, 102) nach einem der Ansprüche 1 bis 7 und
ein Koaxialkabeltrimmwerkzeug (200), wobei das Koaxialkabeltrimmwerkzeug ein Körperelement (202) mit einer Öffnung (218) zum Empfangen eines Koaxialkabels und ein Schneideelement (204) einschließlich einer Klinge (224), die relativ zu der Öffnung zwischen einer schneidenden und nichtschneidenden Position angepasst werden kann, beinhaltet,
wobei, wenn sich die Klinge in der Schneideposition befindet, sie sich über die Öffnung erstreckt, um ein Koaxialkabel, das sich in der Öffnung befindet, im Wesentlichen bis zu der Tiefe des Innenleiters zu schneiden.

9. Steckersatz nach Anspruch 8, wobei das Schneideelement elastisch in die nichtschneidende Position vorgespannt ist.

10. Verfahren zum Montieren eines Verbindersteckers (2, 102) nach einem der Ansprüche 1 bis 7 an ein Koaxialkabel, das einen Innen- und Außenleiter (44, 144, 48, 148), einen Innenisolator (50) zwischen dem Innen- und Außenleiter (44, 144, 48, 148) und eine Außenisolatorhülle (46, 146) umfasst, wobei das Verfahren Folgendes beinhaltet:
Bereitstellen des Verbindersteckers (2, 102) vollständig zusammengebaut und in einem Zustand zum Empfangen eines vorbereiteten Endes eines Koaxialkabels (40, 140),
Trimmen des Koaxialkabels, um den Innenleiter (44, 144) freizulegen,
Einfügen des getrimmten Kabels in den zusammengebauten Verbinderstecker (2, 102) wobei das Abstandshalterelement (14) entfernt wird, und
Festziehen der Haltekappe (12, 112), um eine elektrische Verbindung zwischen dem Körperelement und dem Außenleiter herzustellen, indem die Außenisolatorschicht (46, 146) mit dem Durchbohrungselement (32, 132) durchbohrt wird.

## Revendications

1. Fiche de connecteur (2, 102) destinée à être utilisée avec un câble coaxial (40, 140) comprenant des conducteurs interne et externe (44, 144, 48, 148), un isolant interne (50) entre les conducteurs interne et externe et un manchon isolant externe (46, 146), la fiche de connecteur (2, 102) comprenant
un élément du corps (4, 104) ayant une partie de connecteur (16, 105) au niveau d'une extrémité avant pour la connexion à une prise coaxiale et une partie filetée extérieurement (18, 119) au niveau d'une extrémité arrière, ledit élément du corps étant configuré pour une connexion électrique au conducteur externe (48, 148),
un élément de support (6, 108) configuré pour recevoir et soutenir le conducteur interne,
un élément de préhension pour saisir le câble, l'élément de préhension comprenant une pince (10, 110) comportant une pluralité de doigts (30, 130) réglables radialement, au moins l'un des doigts comprenant un élément de perforation (32, 132) configuré pour percer le manchon isolant externe et établir une connexion électrique entre l'élément du corps (4, 104) et le conducteur externe (48, 148) lorsque l'élément de préhension se trouve dans une configuration de préhension, et
un capuchon de retenue (12, 112) ayant un filetage devis interne (117) qui s'adapte au filetage devis externe (119) de la partie arrière (106) de l'élément du corps et une partie tronconique (34, 134) qui présente une paroi interne inclinée vers l'intérieur (36, 136),
dans laquelle le capuchon de retenue (12, 112) est configuré pour ajuster l'élément de préhension entre une configuration de préhension et une configuration de non préhension en ajustant les positions radiales des doigts (30, 130),
dans laquelle le capuchon de retenue (12, 112) est réglable en étant vissé sur l'élément du corps entre des première et seconde positions décalées axialement,
dans laquelle, lorsque le capuchon de retenue se trouve dans la première position, l'élément de préhension est disposé dans la configuration de non préhension, et lorsque le capuchon de retenue se trouve dans la seconde position, l'élément de préhension est disposé dans la configuration de préhension ;
**caractérisé en ce que**
l'élément du corps (4, 104) a un premier alésage (20, 122) à l'extrémité avant et un second alésage plus grand (22, 120) à l'extrémité arrière, réalisant un gradin (24, 124) à la jonction des deux alésages,
l'élément de préhension est dimensionné pour être placé dans une partie arrière du second alésage avec les doigts faisant saillie vers l'arrière de l'élément du corps, et
la fiche de connecteur (2, 102) comprend un élément d'entretoise (14) qui est fixé de manière amovible à l'élément du corps, ledit élément d'entretoise étant configuré de telle sorte que, une fois fixé à l'élément du corps, il empêche le mouvement du capuchon de retenue (12, 112) de ladite première position à ladite seconde position.

2. Fiche de connecteur selon la revendication 1, dans laquelle l'élément de support (6) comprend une broche de connecteur (8) qui est configurée pour recevoir et soutenir le conducteur interne (44, 144).

3. Fiche de connecteur selon la revendication 2, dans laquelle la broche du connecteur (8) comprend un élément de connecteur élastique (26) qui établit une connexion électrique avec le conducteur interne (44, 144) .

4. Fiche de connecteur selon la revendication 1, dans laquelle l'élément de support (108) est configuré pour soutenir le conducteur interne (44, 144) afin qu'il serve de broche de connecteur.

5. Fiche de connecteur selon l'une quelconque des revendications précédentes, dans laquelle l'élément du corps (104) comprend une partie avant (105) et une partie arrière (106) qui sont connectées ensemble pour effectuer une rotation relative dans laquelle la partie avant (105) comprend le filetage de vis interne (117) destiné à venir en prise avec la prise coaxiale et la partie arrière (106) présente la partie filetée extérieurement (119).

6. Fiche de connecteur selon la revendication 5, dans laquelle les parties avant et arrière (105, 106) de l'élément du corps comprennent des formations de verrouillage complémentaires (115, 116) qui peuvent entrer en prise par un mouvement axial relatif des parties avant et arrière de l'élément du corps afin d'empêcher la rotation relative.

7. Fiche de connecteur selon la revendication 6, dans laquelle les formations de verrouillage complémentaires peuvent être libérées par un mouvement axial relatif des parties avant et arrière de l'élément du corps pour permettre une rotation relative par mouvement axial relatif des parties avant et arrière de l'élément du corps.

8. Kit de fiche comprenant
au moins une fiche de connecteur (2, 102) selon l'une quelconque des revendications 1 à 7 et
un outil de coupe du câble coaxial (200), l'outil de coupe du câble coaxial comprenant un élément du corps (202) avec une ouverture (218) pour recevoir un câble coaxial, et un élément de coupe (204) comprenant une lame (224) qui peut être réglée par rapport à l'ouverture entre les positions de coupe et de non-coupe,
dans lequel, lorsque la lame se trouve dans la position de coupe, elle s'étend à travers l'ouverture pour couper un câble coaxial situé dans l'ouverture sensiblement à la profondeur du conducteur interne.

9. Kit de fiche selon la revendication 8, dans lequel l'élément de coupe est sollicité de manière élastique vers la position de non-coupe.

10. Procédé de montage de la fiche de connecteur (2, 102) selon l'une quelconque des revendications 1 à 7, sur un câble coaxial comprenant des conducteurs interne et externe (44, 144, 48, 148), un isolant interne (50) entre les conducteurs interne et externe (44, 144, 48, 148) et un manchon isolant externe (46, 146), le procédé comprenant les étapes consistant à :
fournir la fiche de connecteur (2, 102) entièrement assemblée et dans un état permettant de recevoir une extrémité préparée d'un câble coaxial (40, 140),
couper le câble coaxial pour exposer le conducteur interne (44, 144),
introduire le câble coupé dans la fiche de connecteur assemblée (2, 102), enlever l'élément d'entretoise (14), et
serrer le capuchon de retenue (12, 112) pour établir une connexion électrique entre l'élément du corps et le conducteur externe en perçant la couche isolante externe (46, 146) avec l'élément de perçage (32, 132).
